# EUROPÄISCHE PATENTSCHRIFT

(11) **EP 0 977 008 B1**
(45) Veröffentlichungstag und Bekanntmachung des Hinweises auf die Patenterteilung: **05.11.2003**
(21) Anmeldenummer: 99810675.1
(22) Anmeldetag: 27.07.1999
(51) Int. Cl.: G01B 21/08

(54) **Verfahren und Vorrichtung zur Bestimmung der Schichtdicke von Ablagerungen**
Method and device for detecting the thickness of a deposition layer
Procédé et dispositif pour la détection de l' épaisseur d' une couche des dépôts

(30) Priorität: 28.07.1998 CH 159098
(43) Veröffentlichungstag der Anmeldung: 02.02.2000
(73) Patentinhaber: Dr. W. Kolb AG, 8908 Hedingen (CH)
(72) Erfinder: Saner, Matthias, 8903 Birmensdorf (CH); Rosatzin, Martin, 8424 Embrach (CH)
(74) Vertreter: Isler & Pedrazzini AG

(56) Entgegenhaltungen:
- US-A- 5 360 549
- DATABASE WPI Week 7524 Derwent Publications Ltd., London, GB; AN 1975-G2855W XP002148964 & SU 437 882 A (MOSCOW GUBKIN PETROCHEM), 12. Dezember 1974 (1974-12-12)
- PATENT ABSTRACTS OF JAPAN vol. 009, no. 009 (P-327), 16. Januar 1985 (1985-01-16) & JP 59 159008 A (KAWASAKI SEITETSU KK), 8. September 1984 (1984-09-08)

## Beschreibung

### TECHNISCHES GEBIET

Die vorliegende Erfindung betrifft ein Verfahren zur Bestimmung der Dicke von Ablagerungen auf der Innenseite von Wänden von Behältern und/oder Leitungen, in welchen ein Prozessmedium fliesst. Die Erfindung umfasst zudem eine Vorrichtung zur Durchführung des obigen Verfahrens.

### STAND DER TECHNIK

Es ist eine wohlbekannte Tatsache, dass sich auf den innenseitigen Wänden von Behältern und Leitungen, die der Führung eines Prozessmediums dienen, Ablagerungen bilden können. Wird als Prozessmedium Wasser oder Wasserdampf verwendet, so können diese Ablagerungen anorganischer oder auch organischer Natur sein. Die organischen Ablagerungen bestehen dabei meist aus biologischem Material, d.h. es sind Zellkulturen, die meist als Biofilme bezeichnet werden.

Diese Ablagerungen sind in den meisten Fällen unerwünscht, weil sie in der Regel zu einer Reduktion des Wirkungsgrads der entsprechenden Anlagen führen. So ist bei Wärmetauschern, Kühlern oder Boilern jede Ablagerung nachteilig, da diese den Wärmefluss zwischen dem Prozesswasser und der Wand reduziert. Auf der anderen Seite ergibt sich ein zusätzlicher Nachteil daraus, dass sich solche Ablagerungen periodisch in Fetzen von den Wänden ablösen und die daraufhin im Prozessmedium mitfliessenden Ablagerungsfragmente oft Leitungen oder Ventile verstopfen.

Insbesondere im Bereich der Papierherstellung ist die Bildung von Biofilmen stark ausgeprägt, weil sowohl die Prozesstemperaturen normalerweise in einem Bereich sind, der für die Bildung von Zellkulturen ideal ist, als auch weil andererseits im Prozesswasser eine grosse Menge an Zellstoff und Füllstoff mitschwimmt, welcher einen geradezu optimalen Nährboden für diese Kulturen bietet. Ausserdem werden aus ökologischen Überlegungen heraus die Prozesswasserflüsse in geschlossenen und immer kleineren Kreisläufen geführt, was die Bildung von Biofilmen weiter beschleunigt. Die sich von den Wänden ablösenden Biofilmfragmente sind für die Führung des Papierherstellungsprozesses aber von fataler Wirkung, weil sie in der Regel zu einem Abriss der neuen Papierbahnen und damit zu Produktionsunterbrüchen Anlass geben. Dieser Tatsache wird dadurch begegnet, dass dem Prozesswasser periodisch sogenannte Biozide beigegeben werden, welche in der Lage sind, die an den Wänden haftenden Zellkulturen abzutöten und damit den Biofilm abzubauen.

Da solche Biozide teuer und ökologisch fragwürdig sind, ist eine möglichst vorsichtige und sparsame Dosierung angebracht. Dies müsste optimalerweise so geschehen, dass das Biozid dem Prozesswasser in Abhängigkeit der momentanen Biofilmdicke zugegeben wird, und zwar gerade nur so viel, dass die bestehende Schicht abgebaut wird. Es ist somit von grosser Bedeutung, eine Methode zur Verfügung zu haben, welche die Schichtdicke solcher Ablagerungen möglichst "online", d.h. im Prozess selbst und dies auch noch möchlichst kontinuierlich messen kann.

Eine einfache Möglichkeit zur Überwachung der Dicke von Ablagerungen in Prozesswasserbehältern besteht darin, einen Teil des Prozesswassers in einer Leitung abzuzweigen und die Wärmeleitung oder den Wärmeleitwiderstand zwischen der Wand der Leitung und dem Prozesswasser durch eine solche Schicht hindurch zu messen. Ein solches Verfahren ist z.B. beschrieben in *Chemical Processing*, 4, 1990, S. 34-38.

Eine Methode zu Messung der Wärmetauscheffizienz von Leitungssystemen ist z.B. aus der Schrift US 5,248,198 bekannt. Es wird dort die thermische Relaxationszeit der Leitungswand nach einer kurzen Erwärmung derselben gemessen. Je nach Effizienz des Wärmetausches zwischen dem Prozesswasser in der Leitung und der Leitungswand wird die Relaxationszeit kleiner oder grösser sein. So ist bei optimaler Effizienz eine sehr kurze Relaxationszeit zu erwarten, während in Gegenwart einer dicken Schicht von Ablagerungen der Wärmefluss verlangsamt wird, und lange Relaxationszeiten resultieren. Ein wesentlicher Nachteil der in der US 5,248,198 beschriebenen Methode ist, dass sie so wie dort beschrieben für eine Testleitung ausgelegt ist, welche dem eigentlichen Prozesswasserkreislauf eigens abgezweigt werden muss, und dass nur eine gepulste und keine kontinuierliche Messung der Schichtdicke möglich ist. Zudem kann der zu messende Biofilm infolge der notwendigerweise grossen Temperaturauslenkung thermisch zerstört und dadurch die Messung verfälscht werden.

Eine über die Dicke von Ablagerungen gesteuerte Zugabe von Mitteln, die solche Schichten verhindern oder abbauen können, ist z.B. aus der Patentschrift US 5,360,549 bekannt. Dort wird die Schichtbildung dadurch gemessen, dass ein Teil des Prozesswassers in einer Leitung abgezweigt wird, und dass die Wärmeleitung oder der Wärmeleitwiderstand der Wand dieser Leitung gemessen wird. Die in diesem Zusammenhang wesentliche Idee der dort beschriebenen Erfindung besteht darin, dass die zur Messung des Wärmeflusses bzw. des Wärmeflusswiderstandes notwendige Erwärmung der Wand der Leitung gleichzeitig dazu führt, dass sich dort Ablagerungen schneller bilden und somit die Zugabe von die Ablagerung verhindemden oder abbauenden Mitteln antizipativ gesteuert werden kann. Diese Methode hat nun aber ebenfalls den Nachteil, dass für eine sinnvolle Messgenauigkeit der Schichtdicke grosse Temperaturdifferenzen zur Prozesswassertemperatur eingestellt werden müssen. Zudem ist die Annahme, dass eine Erwärmung die Bildung einer Schicht beschleunigt nicht so allgemein gültig, was auch die Möglichkeit zur effektiv antizipativen Zugabe stark einschränkt. So ist beispielsweise gerade bei der Bildung von Biofilmen nur in gewissen Temperaturbereichen die Stimulation des Zellwachstums durch erhöhte Temperatur möglich, in anderen Temperaturbereichen ist aber die gegenteilige Wirkung zu beobachten, dass nämlich eine Erhöhung der Temperatur das Zellwachstum ganz zum Erliegen bringt oder zumindest verlangsamt. Ein weiterer Nachteil ist, dass jede grössere Temperaturexkursion dazu führt, dass die dabei gemessene Schichtdicke nicht mehr für die Schichtdicke der anderen Teile der Wände repräsentativ ist. Ein zusätzlicher Nachteil einer erhöhten Temperatur liegt im forcierten Wachstum von anorganischen Ablagerungen (z.B. Kalk), die zwar auch zu einem erhöhten Messsignal führen, aber nicht mit der Dicke des Biofilms korrelieren.

### DARSTELLUNG DER ERFINDUNG

Der Erfindung liegt demnach die Aufgabe zugrunde, ein Verfahren zur Verfügung zu stellen, welches
- eine kontinuierliche Messung der Schichtdicke von Ablagerungen erlaubt,
- eine Messung erlaubt, welche möglichst repräsentativ ist für alle das Prozessmedium umschliessenden Wände,
- die Wärmeleitung oder den Wärmeleitwiderstand zwischen einer Behälterwand und dem Prozessmedium durch eine Ablagerungsschicht hindurch genau zu messen in der Lage ist, ohne dass grosse Temperaturabweichungen von der Prozessmediumtemperatur notwendig sind.

Diese Aufgabe wird bei einem Verfahren der eingangs genannten Art dadurch gelöst, dass gleichzeitig an wenigstens zwei, mit dem Prozessmedium in Kontakt stehenden und dem Ablagerungsprozess ausgesetzten Flächen die Wärmeleitung oder der Wärmeleitwiderstand gemessen wird, der zwischen den Flächen und dem Prozessmedium durch die Ablagerungsschicht wirksam ist, und dass für diese Messung Mittel vorhanden sind, welche wenigstens eine dieser Flächen auf einer Temperatur halten, die niedriger als die Temperatur des Prozessmediums liegt, und wenigstens eine andere dieser Flächen auf einer Temperatur halten, welche höher als die Temperatur des Prozessmediums liegt. Der Kern der Erfindung liegt somit darin, dass durch eine positive sowie eine negative Temperaturauslenkung relativ zur Prozessmediumtemperatur Bedingungen geschaffen werden, die möglichst nahe bei denen sind, welche am Rest der Wände herrschen und dennoch eine grosse Messgenauigkeit erlauben.

Eine erste bevorzugte Ausführungsform der Erfindung zeichnet sich dadurch aus, dass zusätzlich zur Messung der Wärmeflüsse auch die Temperatur des Prozessmediums gemessen wird, um die Dicke der Schicht zu bestimmen.

Eine andere bevorzugte Ausführungsform der Erfindung zeichnet sich dadurch aus, dass das Prozessmedium Wasser ist, und dass die Schicht aus einem Biofilm besteht.

Eine weitere bevorzugte Ausführungsform der Erfindung ist dadurch charakterisiert, dass die Messung der Wärmeflüsse in einem Messkopf erfolgt, welcher einfach in das Prozesswasser eingetaucht wird, und dessen Wände als Messflächen dienen.

Eine andere Ausführungsform der Erfindung weist das Merkmal auf, dass die Temperaturdifferenz zwischen der kalten und der warmen Messfläche gering ist, wobei bereits ein oder einige 1/10-tel °Celsius schon genügen können. Die Temperaturdifferenz sollte insbesondere nicht über 20°, bevorzugt jedoch unter 10°, und besonders bevorzugt unter 5° Celsius eingestellt werden, so dass gerade bei Biofilmen eine möglichst ungestörte Messung möglich ist. Dies z.B. bei Prozessmediumtemperaturen von ca. 35°.

Eine zusätzliche Ausführungsform der Erfindung hat als Merkmal, dass die die Dicke der Schicht charakterisierenden Messgrössen dazu verwendet werden, die Zugabe von Mitteln in geregelter und optimaler Weise zu steuern, welche in der Lage sind, die Dicke der Schicht in abbauender oder auch in aufbauender Weise zu beeinflussen. Insbesondere kann die Zugabe derart eingestellt werden, dass die Regelung auf eine vorgegebene Schichtdicke (Sollwert) erfolgt.

Es ist weiter Aufgabe der Erfindung, eine Vorrichtung zur Durchführung des obigen, erfindungsgemässen Verfahrens anzugeben.

Diese Aufgabe wird gelöst durch eine Vorrichtung bei welcher gleichzeitig an wenigstens zwei, mit dem Prozessmedium in Kontakt stehenden und dem Ablagerungsprozess ausgesetzten Flächen die Wärmeleitung oder der Wärmeleitwiderstand gemessen wird, der zwischen den Flächen und dem Prozessmedium durch die Ablagerungsschicht wirksam ist, wobei für diese Messung Mittel vorhanden sind, welche wenigstens eine dieser Flächen auf einer Temperatur halten, die niedriger als die Temperatur des Prozessmediums liegt, und wenigstens eine andere dieser Flächen auf einer Temperatur halten, welche höher als die Temperatur des Prozessmediums liegt.

Bei der erfindungsgemässen Vorrichtung wird bevorzugt die Ausdehnung der Flächen in Strömungsrichtung des Prozessmediums möglichst gering gehalten, damit die Verweilzeit des Prozessmediums über den Flächen möglichst kurz ist. Dadurch wird unmittelbar an den Flächen eine wesentliche Erwärmung des die Flächen überstreichenden Prozesswassers und ein damit verbundener verminderter Wärmefluss weitgehend verhindert, und damit eine zusätzliche Fehlerquelle eliminiert.

Eine weitere bevorzugte Ausführungsform der Vorrichtung nach der Erfindung besteht darin, dass die Kühlung bzw. das Heizen der Messflächen durch die Lötstellen eines Peltier-Elements bewirkt wird.

Die erwähnten sowie noch weitere Ausgestaltungen des erfindungsgemässen Verfahrens sowie der erfindungsgemässen Vorrichtung ergeben sich jeweils aus den abhängigen Ansprüchen.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: eine schematische Darstellung eines Messkopfs im Prozesswasserstrom;
- Fig. 2: eine schematische Darstellung der biofilmgesteuerten Biozidzugabe;
- Fig. 3: a) das Wärmeleitungsverhalten im Messkopf für konstanten Strom im Peltier-Element, b) Wärmeleitungsverhalten als Funktion der Biofilm-Dicke; und
- Fig. 4: das Wärmeleitungsverhalten im Messkopf für konstante Temperaturdifferenz

### WEGE ZUR AUSFÜHRUNG DER ERFINDUNG

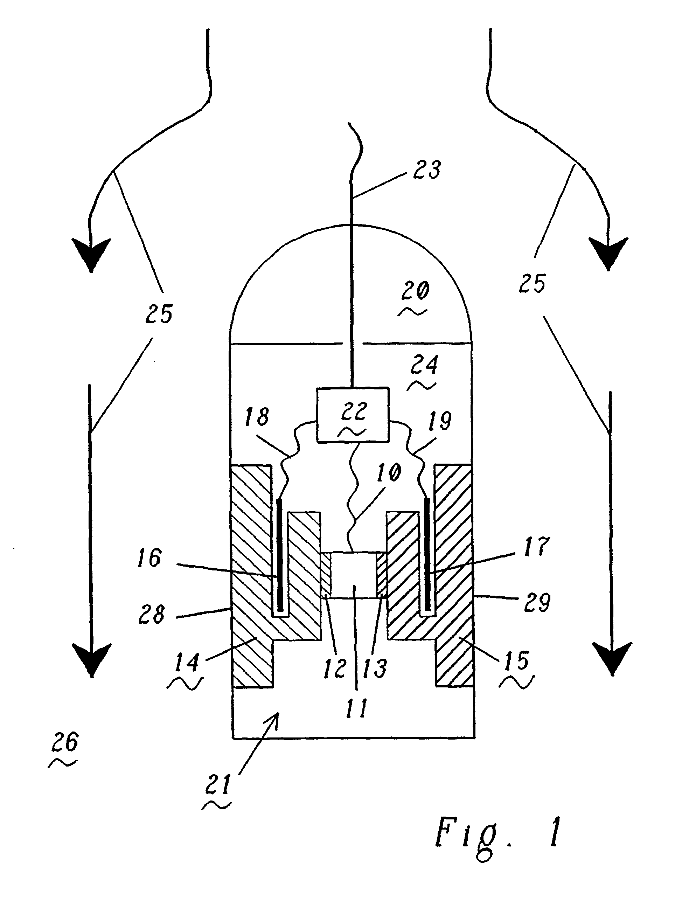

Die Figur 1 zeigt ein Ausführungsbeispiel eines Messkopfes 21, der geeignet ist, die Wärmeleitung oder den Wärmeleitwiderstand zwischen zwei Flächen 28,29, welche Teile der Aussenwand des Messkopfes 21 bilden, und dem Prozesswasser 26 zu messen. Gezeigt ist ein Schnitt durch einen im wesentlichen quaderförmigen Messkopf 21. Der Messkopf 21 ist in diesem Fall über ein Befestigungsmittel 23, über welches gleichzeitig die Messinformation 44,54 übergeben wird, im Prozesswasserstrom 25 angebracht und dadurch leicht durch eine Luke oder sonstige Öffnung im Leitungssystem oder einem Behälter anzubringen. Der Messkopf 21 kann durch seine Messkopfkappe 20 eine stromlinienförmige Aussenform aufweisen.

Die Form des Messkopfes 21 ist vorzugsweise hydrodynamisch ausgebildet, damit das Prozesswasser die Messflächen 28,29 des Messkopfes 21 möglichst laminar umströmt. Dies bringt u.a. folgende zwei Vorteile: Zum einen wird ein Abtrag einer Ablagerung wie beispielsweise eines Biofilmes durch allfällige Strömungswirbel und damit eine unerwünschte Reduktion des Messsignales verhindert. Zum anderen können im Prozesswasserstrom 25 mitschwimmende, längliche Festkörper (wie etwa Zellstofffasern) den Messkopf 21 in der laminaren Strömung ohne Kollision passieren, wodurch ein unerwünschter Aufbau einer Schicht dieser Festkörper und eine damit verbundene Signalverfälschung vermieden wird. Dieser zweite Effekt wird auch durch eine optimale Breite des Sensor begünstigt, die dazu grösser als die Länge der längsten Festkörper sein sollte.

Die Flächen 28,29 können u.U. zusätzlich mit einer geeigneten Beschichtung versehen sein, so dass weitgehend verhindert werden kann, dass der Prozesswasserstrom 25 den Ablagerungsvorgang auf den Flächen 28,29 behindert, oder Ablagerungen vom Messkopf ablöst. Als geeignete Beschichtung hat sich beispielsweise eine Schicht aus Niob-Zirkon-Nitrit erwiesen, welche in einer Dicke von 1,5 - 3 µm aufgetragen wird. Der Messkopf 21 ist im wesentlichen aus einem thermisch gut isolierenden Material, z.B. einem Kunststoff-Trägerblock 24 aus PVDF-Kunststoff gefertigt, in welchen weitere Teile eingelassen sind. Im Innersten des Trägerblockes 24 ist ein Peltier-Element 11 angebracht, welches über eine Leitung 10 von einer ebenfalls im Trägerblock 24 eingelassenen Zentraleinheit 22 mit elektrischem Strom gespeist wird.

Ein Peltier-Element 11 zeichnet sich dadurch aus, dass es einen geschlossenen Kreis aus wenigstens zwei unterschiedlichen, in Serie geschalteten Leitungen aus verschiedenen Metallen oder Legierungen aufweist. Wird der Leiterkreis von elektrischem Strom durchflossen, so hat das Peltier-Element bei geeigneter Wahl der Materialien die bemerkenswerte Eigenschaft, dass sich eine der Lötstellen 12 zwischen den unterschiedlichen Leitungen abkühlt, während sich die andere Lötstelle 13 erwärmt (sog. Thermoelektrischer Effekt).

Das im Messkopf 21 eingelassene Peltier-Element 11 steht mit seinen zwei Lötstellen 12,13 mit Kontaktblöcken 14,15 in Kontakt. Diese Kontaktblöcke 14,15 sind ebenfalls im Trägerblock 24 eingelassen, sind aus einem thermisch gut leitenden Material, beispielsweise V4A Stahl (DIN 1.45.71), und bilden auf ihren dem Peltier-Element abgewandten Seiten die dem Prozesswasser 26 ausgesetzten Flächen 28,29. Der Messkopf 21 bzw. die darin eingelassenen Blöcke 14,15 können vorteilhafterweise mit einer O-Ring-Konstruktion so abgedichtet werden, dass die O-Ringe neben der Dichtfunktion auch eine Federfunktion haben. Mit dieser Federwirkung der O-Ringe werden thermische Längenausdehnungen zwischen Gehäuse und Blöcken 14,15 derart ausgeglichen, dass die Anpresskräfte auf das Peltiermodul die Toleranzwerte nie übersteigen. Wichtig ist, dass die Kontaktblöcke 14,15 untereinander thermisch entkoppelt sind. Die thermische Isolation zwischen den beiden Flächen 28,29 bzw. den Kontaktblöcken 14,15 sollte einerseits so dick gewählt werden, dass eine gute thermische Isolation gewährleistet ist, und andererseits dünn genug sein, dass der Anteil der Flächen 28,29 bezüglich der gesamten Messkopfoberfläche möglichst gross ist. Damit wird die Empfindlichkeit des Messkopfes 21 insgesamt erhöht und mögliche Nichtlinearitäten des rohen Messsignals werden verringert. So kann z.B. bei einer Linearisierung des Rohsignals eine bessere Auflösung und damit eine hohe Messgenauigkeit erzielt werden. Die Flächen 28,29 der Kontaktblöcke 14,15 sind die eigentlichen Messflächen und sind dem Ablagerungsprozess ausgesetzt. Es erweist sich bei der Konstruktion der Flächen 28 und 29 als vorteilhaft, diese in ihrer Ausdehnung in Fliessrichtung 25 klein zu halten. Fliesst nämlich dasselbe Prozesswasser 26 für längere Zeit an einer solchen Fläche entlang, wird es sich dessen Temperatur angleichen, was dazu führt, dass die Messung stark davon abhängt, wie lange sich das Prozesswasser unmittelbar an der Fläche entlangbewegt. Dies macht die Messung einerseits in vermehrtem und unerwünschtem Masse von der Strömungsgeschwindigkeit des Prozesswassers 26 abhängig. Andererseits wird auch der gesamte Wärmeübergang von den Messflächen in das Prozesswasser oder umgekehrt verringert und damit die Messempfindlichkeit herabgesetzt. Gerade diese Abhängigkeiten können durch eine kleine Länge der Flächen 28 und 29 in Fliessrichtung 25 stark reduziert werden.

In den Kontaktblöcken 14,15 oder an deren Rändern sind Thermosensoren 16,17 angebracht, welche die in den Kontaktblöcken herrschenden Temperaturen messen. Die Thermosensoren 16,17 sind über Leitungen 18,19 mit der Zentraleinheit 22 verbunden.

Um ausgeglichene und auf das Prozesswasser 26 bezogene Temperaturverhältnisse am Peltier-Element 11 zu bewirken, kann es sich unter gewissen Umständen als notwendig erweisen, Teile des Peltier-Elements 11 durch eine entsprechende Umspülung mit Prozesswasser 26 auf einer der Prozesswassertemperatur entsprechenden Temperatur zu halten.

Das Wirkungsprinzip des Messkopfes 21 ist nun das folgende: Wird das Peltier-Element 11 von einem Strom durchflossen, kühlt sich die eine Lötstelle 12 ab. Diese Abkühlung führt ihrerseits zu einer Abkühlung des mit der Lötstelle 12 in thermischem Kontakt stehenden Kontaktblocks 14. Insbesondere führt der Wärmefluss vom Kontaktblock 14 zur Lötstelle 12 zu einer Abkühlung der dem Prozesswasser 26 ausgesetzten Fläche 28. Ist die Fläche 28 von Ablagerungen frei, resultiert dies in einem sehr effizienten Wärmefluss vom Prozesswasser 26 zur Fläche 28. Infolge der grossen Wärmekapazität des Prozesswassers 26 bleibt die Temperatur der Fläche 28 in die Nähe der Temperatur des Prozesswassers. Entsprechend wird man mit dem Thermosensor 16 eine Temperatur messen, welche unterhalb, aber in der Nähe der Prozesswassertemperatur liegt. Befindet sich auf der Fläche 28 hingegen eine Ablagerungsschicht, wird der Wärmefluss vom Prozesswasser 26 zur Fläche 28 behindert und die Kühlung der Fläche 28 durch die Lötstelle 12 verläuft fast ungehindert. Entsprechend misst man in diesem Fall mit dem Thermosensor 16 eine Temperatur, welche wesentlich unterhalb der Prozesswassertemperatur liegt. Analog verhält es sich auf der andern Seite des Messkopfes 21, wo die warme Lötstelle 13 den Kontaktblock 15 und damit auch die dem Prozesswasser 26 ausgesetzte Fläche 29 erwärmt. In diesem Fall misst man wiederum bei ablagerungsfreier Fläche 29 mit dem Thermosensor 17 eine Temperatur, welche nur unwesentlich oberhalb der Prozesswassertemperatur liegt. Liegt auf der Fläche 29 eine Ablagerung auf, so ist wiederum der Wärmefluss zum Prozesswasser behindert und es stellt sich im Kontaktblock 15 eine mit dem Thermosensor 17 leicht messbare, wesentlich oberhalb der Prozesswassertemperatur liegende Temperatur ein.

Die Differenz der beiden mit den Thermosensoren 16 und 17 gemessenen Temperaturen erweist sich dabei als geeignetes Mass für die Bestimmung der Ablagerungsschichtdicke. Insbesondere zeigt es sich, dass sich in weiten Schichtdickenund Temperaturbereichen diese Differenz in guter Approximation linear zur Dicke der Ablagerungsschicht verhält. Das Rohsignal des Sensors zeigt dennoch naturgemäss mit zunehmender Biofilmdicke ein Sättigungsverhalten. Diese Nichtlinearität kann gemessen und als Grundlage für einen Linearisierungsalgorithmus verwendet werden. Das so rechnerisch korrigierte Messsignal ist direkt proportional zur Biofilmdicke. So besteht auf jeden Fall eine kalibrierbare Beziehung zwischen der Differenz der Temperaturen und der an den Flächen 28 und 29 aufliegenden Schichten. Dies ermöglicht eine einfache Auswertung der Messung.

Es ist bekannt, dass das Wachstum von Biofilmen stark temperaturabhängig ist. So begünstigt z.B. die Temperatur des Prozesswassers in der Papierindustrie das Biofilmwachstum i.A. optimal. Mit steigender Temperatur wird das Wachstum aber zunehmend behindert. Es ist deshalb hinsichtlich einer genauen Messung von Interesse, die Temperatur der beheizten Fläche 29 so nahe wie möglich bei der Temperatur des Prozesswassers 26 zu halten, um den zu messenden Biofilm thermisch nicht zu zerstören oder zumindest sein Wachstum nicht negativ zu beeinflussen. Andererseits ist für eine hohe Messgenauigkeit bei gegebener Schichtdicke ein möglichst grosses Messsignal notwendig. Ein Vorteil der hier vorgeschlagenen Anordnung ist nun eben, ein grosses Messsignal und damit verbunden eine hohe Messgenauigkeit zu erreichen, indem die Differenz der Temperaturen der beiden Flächen 28 und 29 verwendet wird. Selbst bei kleinen Temperaturauslenkungen der Flächen 28 und 29 von der Prozesswassertemperatur resultiert nämlich in der Differenz der Temperaturen der Flächen 28 und 29 ein grosser Messwert. Damit wird grundsätzlich trotz grossem Messwert das Wachstum des Biofilmes thermisch wenig beeinflusst. Ein weiterer Vorteil ist dadurch gegeben, dass eine allenfalls trotzdem auftretende, kleine thermische Beeinflussung des Biofilmwachstums auf den Flächen 28 und 29 in erster Näherung durch die Differenzbildung kompensiert wird. Der etwas höhere Temperaturbeitrag der kühleren Seite 28 mit dem leicht dickeren Biofilm wird durch den etwas geringeren Temperaturbeitrag des leicht dünneren Biofilmes auf der wärmeren Fläche 29 kompensiert. Ein weiterer Vorteil der hier vorgeschlagenen Methode liegt darin begründet, dass durch eine geringe Erwärmung der Fläche 29 eine thermisch induzierte Ablagerung von anorganischen Materialien (wie z.B. Kalk) weitgehend vermieden wird. Diese anorganischen Ablagerungen würden zu einem unerwünschten Signalbeitrag führen, der das Messsignal des Biofilms störend überlagert.

Da für eine repräsentative Messung die Temperaturdifferenz zwischen jeweils einer der Flächen 28 und 29 und der Temperatur des Prozesswassers möglichst klein sein sollte um Verfälschungen zu vermeiden und nicht ein Schichtwachstum zu induzieren oder zu verhindern, erweist sich die Verwendung der Differenz der Temperaturen als besonders vorteilhaft. Selbst bei kleinen Abweichungen der Temperaturen der Flächen 28 und 29 von der Prozesswassertemperatur resultiert nämlich bereits ein grosser, empfindlicher Messwert. Zusätzlich ergibt sich der Vorteil, dass durch die Verwendung einer kalten 28 und einer warmen 29 Kontaktfläche relativ zum Prozesswasser 26 u.U. immer noch auftretende Verfälschungen der Messwerte durch induziertes oder verhindertes Schichtwachstum in erster Näherung kompensiert werden.

Es gibt nun zwei grundsätzlich verschiedene Methoden, die Effizienz des Wärmeaustauschs zwischen den Flächen 28 und 29 und dem Prozesswasser zu bestimmen.

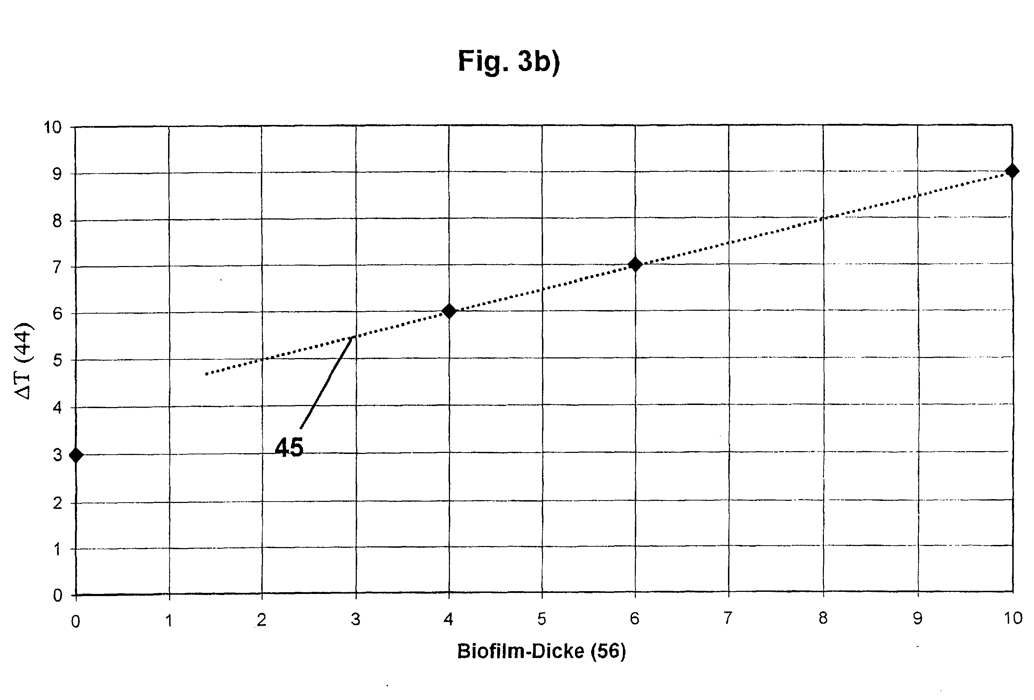

Die erste Methode beruht auf der Messung der Wärmeleitung. Bei ihr wird der durch das Peltier-Element 11 fliessende elektrische Strom konstant gehalten und die Differenz der mit den Thermosensoren 16 und 17 gemessenen Temperaturen kann dann als Mass für die Schichtdicken verwendet werden. Ist die Differenz der Temperaturen gross, so ist eine grosse Schichtdicke zu erwarten, da die Wärme bzw. die Kälte nicht gut ans Prozesswasser 26 über die Flächen 28 und 29 abgeführt werden kann. Je kleiner die Differenz, desto besser der Wärmeaustausch über die Flächen 28 und 29, und desto dünner auch die Ablagerungsschicht. Das Minimum der Temperaturdifferenz ist bei der ablagerungsfreien Messsonde 21 zu erwarten. Man beobachtet über wesentliche Temperatur- und Schichtdickenbereiche einen linearen Zusammenhang zwischen der Temperaturdifferenz und der Ablagerungsschichtdicke (vgl. Figur 3b)). Auf jeden Fall lässt sich ein parametrisierbarer und kalibrierbarer Zusammenhang zwischen den zwei Grössen finden, was für die Praxis besonders relevant ist. Diese erste Methode ist besonders einfach und verlangt nur, dass die Stromversorgung des Peltier-Elements 11 exakt konstant gehalten wird. Die Differenzbildung der mit den Thermosensoren 16 und 17 gemessenen Temperaturen ist auf einfachste Weise möglich. Es kann sich aber als Nachteil dieser Methode erweisen, dass sich durch die Änderung der Temperaturen an den Flächen 28 und 29 bei wachsender oder abnehmender Ablagerungsschichtdicke auch die Ablagerungsbedingungen an den Flächen leicht ändern, was insbesondere bei Biofilmen von Relevanz sein kann.

Die zweite Methode ist etwas aufwendiger, ist aber insbesondere bei Bedarf nach möglichst schichtdickenunabhängiger Ablagerungscharakteristik von Vorteil. Sie beruht darauf, dass die Differenz der mit den Thermosensoren 16 und 17 gemessenen Temperaturen konstant gehalten wird, indem das Peltier-Element 11 entsprechend mit elektrischem Strom angesteuert wird. Bei einer ablagerungsfreien Messsonde 11 ist somit mit einem maximalen elektrischen Strom durch das Peltier-Element 11 zu rechnen, da bei diesen Bedingungen die vom Peltier-Element 11 erzeugte Wärme bzw. Kälte maximal effizient durch die Flächen 28 und 29 ans Prozesswasser 26 abgegeben werden kann. Nimmt die Ablagerungsschicht zu, so ist der Wärmefluss durch die Flächen 28 und 29 zunehmend behindert, und um die Temperaturdifferenz an den Thermosensoren 16 und 17 konstant zu halten, muss entsprechend der elektrische Strom durch das Peltier-Element 11 reduziert werden. Damit sind die Temperaturen an den Flächen 28 und 29 immer gleich, und die Ablagerungscharakteristik hängt nicht von der Schichtdicke ab. Gerade bei stark temperaturabhängig wachsenden Biofilmen ist eine solche Konstanz der Temperaturen wünschenswert. Auf der anderen Seite ist diese Methode natürlich aufwendiger als die erste Methode, da eine aktive Regelung notwendig ist, um den Strom und die Temperaturdifferenz anzugleichen.

Die beiden vorgenannten Methoden können ggf. auch gleichzeitig angewandt werden, indem z.B. zwei Messköpfe der Art von Fig. 1 (der eine auf konstante Temperatur und der andere auf konstanten Strom geregelt) eingesetzt und ihre Signale gemeinsam ausgewertet werden. Durch eine derartige Erweiterung könnten zusätzliche Informationen z.B. über die thermische Sensibilität der Ablagerungsschicht, insbesondere einer mikrobiologischen Ablagerungsschicht, gewonnen werden.

Zwei oder noch mehr Messköpfe könnten auch so eingesetzt werden, dass die ihnen zugeordneten Messflächenpaare durch eine gesamthafte Beheizungund/oder Kühlung bezüglich ihres Temperaturmittelwertes gegeneinander und/oder gegenüber der Temperatur des Prozessmediums verschoben werden. So könnte z.B. der Temperaturmittelwert eines ersten Messkopfes durch Kühlung etwas unter und der eines zweiten Messkopfes durch Heizen etwas über den Temperaturwert des Prozessmediums verschoben werden. Hierdurch liessen sich insbesondere Informationen bezüglich der Temperaturabhängigkeit der Ablagerungsschicht gewinnen.

Zwei und mehr Messflächenpaare könnten ggf. auch in einem gemeinsamen Messkopf integriert werden.

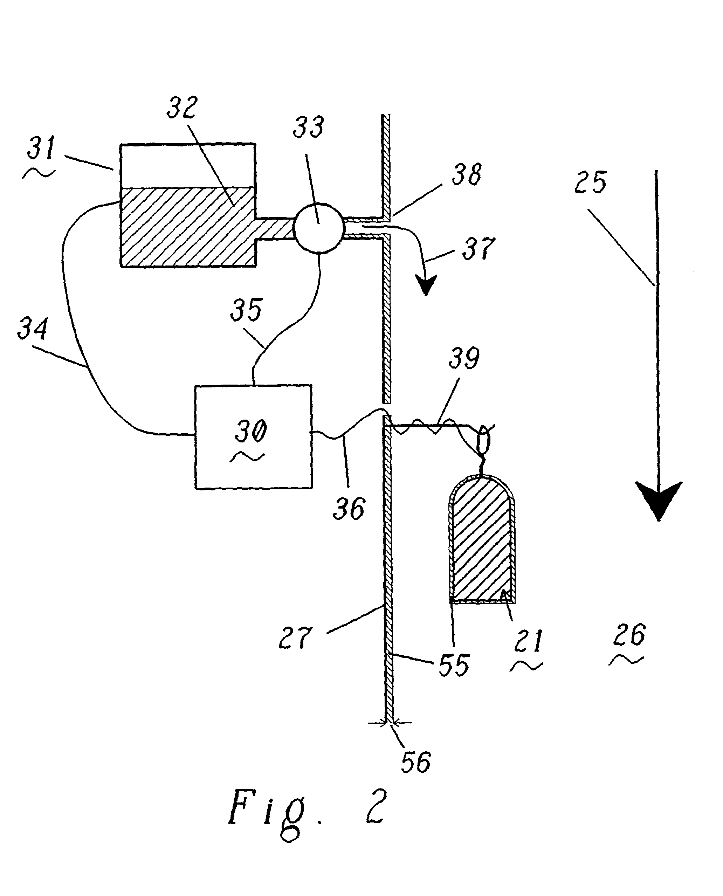

Figur 2 zeigt einen Aufbau, wie er grundsätzlich zur gezielt geregelten Zugabe eines Mittels verwendet werden kann, das geeignet ist, die Schichtdicke einer Ablagerung in abbauender oder aufbauender Weise zu beeinflussen. Speziell soll im weiteren allerdings angenommen werden, es sich bei dem Mittel um ein einen Schichtabbau bewirkendes Mittel und insbesondere um ein Biozid handelt. Die Messsonde 21 hängt dabei im Prozesswasserstrom 25 an einer einfachen Befestigung 39, es ist aber auch möglich sie einfach an ihrem Befestigungsmittel 23 welches zugleich die Leitung für die Messsignale darstellt, durch eine Luke oder ein Loch in einem Behälter in das Prozesswasser 26 hängen zu lassen. In dieser Abbildung ist die Ablagerungsschicht, hier ein Biofilm 55 von der Dicke 56, dargestellt. Durch eine Öffnung in der Behälterwand 27 werden die Messsignale, welche die Schichtdicke 56 charakterisieren, einer Steuereinheit 30 zugeführt, welche in diesem Fall ausserhalb des Behälters liegt. Es ist auch denkbar, die Steuereinheit 30 als ganzes in den Messkopf 21 zu integrieren und in die Zentraleinheit 22 einzubetten. Neben der Steuereinheit 30 ist ausserhalb des Behälters auch noch ein Tank 31 vorhanden, welcher als Behälter für die im vorliegenden Beispiel verwendete Biozidlösung 32 dient, und welcher mit dem Prozesswasserbehälter über eine Pumpe 33 und eine Leitung über einem Einlass 38 in Verbindung steht. Die Biozidlösung 32 ist in der Lage, wenn dem Prozesswasser 26 beigegeben, den Biofilm abzubauen. Die Steuereinheit 30 verfügt einerseits über eine Signalleitung 34 zum Biozidtank 31, mittels welcher Kenndaten über den Inhalt des Biozidtankes 31, wie z.B. dessen Füllstand, der Steuereinheit 30 übermittelbar sind, und über eine weitere Signalleitung 35 zur Pumpe 33. Damit kann die Pumpe 33 entsprechend den vom Messkopf 21 erhaltenen, die Ablagerungsschichtdicke 56 charakterisierenden Daten angesteuert werden und bei Bedarf, d.h. z.B. zu grosser Schichtdicke 56, ein Biozidstrom 37 dem Prozesswasser 26 beigemischt werden.

Es zeigt sich, dass zur unmittelbaren Verwendbarkeit eines Messkopfes 21 dieser vorteilhafterweise vor der Messung präkonditioniert wird, d.h. dass wenigstens die Flächen 28,29 oder aber auch einfach der ganze Messkopf 21 einer physikalischen, chemischen undloder biologischen Vorbehandlung unterzogen werden. Auf diese Weise wird das Wachstum des Biofilmes auf den Flächen 28,29 von Beginn des Sensoreinsatzes an motiviert und ein einmal aufgewachsener Biofilm haftet gut während der gesamten Messphase (d.h. zwischen zwei Reinigungen der Anlage). Damit spiegelt der Biofilm auf der Sensoroberfläche, und somit auch das entsprechende Messsignal, jederzeit die Biofilm-Situation im Wasserkreislauf der Anlage wieder. Würden sich im Laufe einer Messphase Teile des Biofilmes von der Sensoroberfläche lösen, hätte dies einen unerwünschten Messfehler (zu kleines Messsignal) zur Folge. Zur Präkonditionierung eignet sich ein Eintauchen des Messkopfes 21 in ein dem Prozessmedium 26 ähnliches Medium während einer Zeit von Tagen bis Wochen. Die dabei auf den Flächen 28,29 entstehenden Ablagerungen führen dazu, dass die Bildung und Haftung eines Biofilms nach der Präkonditionierung wesentlich verbessert werden kann. Das ansonsten manchmal beobachtete verzögerte Ansprechverhalten der Messköpfe, d.h. die Zeitspanne zwischen dem Eintauchen des Kopfes in das Medium bis zur initialen Bildung eines Biofilmes mit dem damit verbundenen auswertbaren Messignal können so vermieden werden.

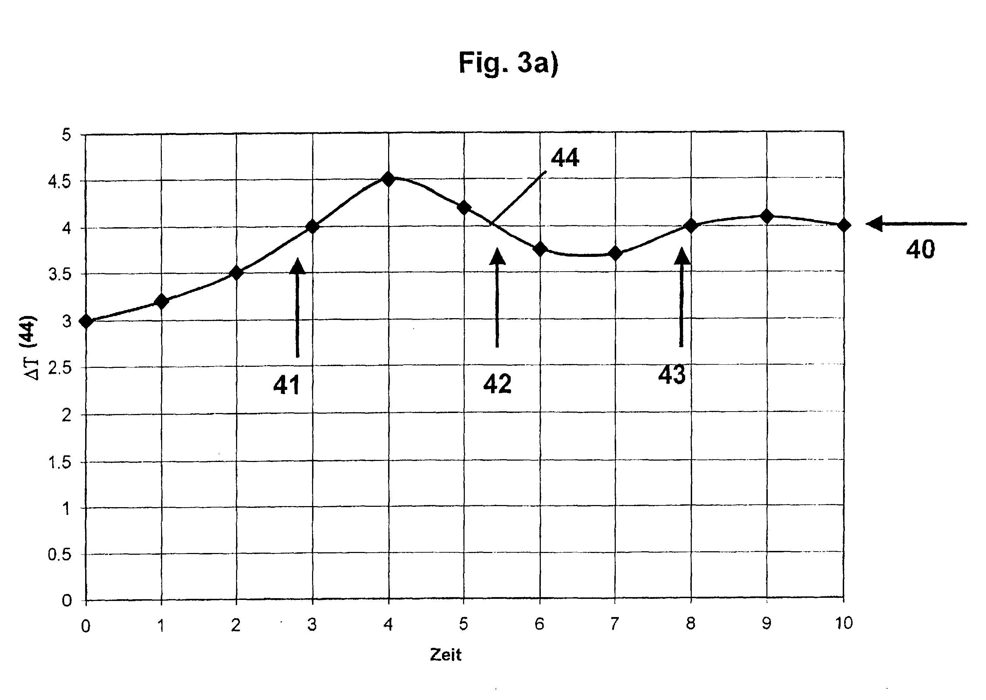

Figur 3a) zeigt den Betrieb des Messkopfes 21 und die entsprechende Biozidzugaberegelung der Steuereinheit 30 bei Verwendung der ersten Methode, d.h. für konstanten elektrischen Ansteuerungsstrom des Peltier-Elements 11. Das Verfahren beruht im wesentlichen auf dem beobachteten und in Figur 3b) schematisch dargestellten kalibrierbaren funktionellen Zusammenhang zwischen der Temperaturdifferenz 44 und der Schichtdicke 56. Insbesondere in bestimmten Temperatur- und Schichtdickenbereichen ist eine einfache und für die Regelung geeignete lineare Approximation 45 dieser Abhängigkeit möglich. In Figur 3a) wird bei einer Situation gestartet, in welcher kein Biofilm 55 vorhanden ist und deshalb die Temperaturdifferenz 44 klein ist. Das Schichtwachstum führt nun mit zunehmender Zeit zu einer Zunahme der Temperaturdifferenz 44 infolge des verhinderten Wärmeaustausches mit dem Prozesswasser 26. Bei Überschreitung eines vorgegebenen, für eine bestimmte Schichtdicke 56 charakteristischen Wertes 40 der Temperaturdifferenz 44, reagiert die Steuereinheit 30, indem sie die Biozidzugabe 41 in den Prozesswasserkreislauf startet. Die Schichtdicke 56 nimmt daraufhin ab und ebenso natürlich die Temperaturdifferenz 44. Unterschreitet die Temperaturdifferenz nach einer gewissen Zeit wieder den kritischen Wert 40, so reagiert die Steuereinheit 30 mit einem Absetzen der Biozidzugabe 42. Nach einer weiteren Zeitspanne wird die Schicht wieder den kritischen Wert überschreiten und die Steuereinheit 30 wird wiederum Biozid 32 zugeben 43. Idealerweise wird sich nach kurzer Zeit die Regelung der Biozidzugabe auf das Schichtwachstum einpendeln und die Schichtdicke 56 wird sich somit infolge der optimalen Biozidzugabe bei dem gewünschten kritischen Wert stabilisieren. Bei idealen Regelverhältnissen ist natürlich kein Einpendeln notwendig, sondern es erfolgt eine kontinuierliche Annäherung des Wertes der Temperaturdifferenz von unten an den kritischen Wert 40 ein.

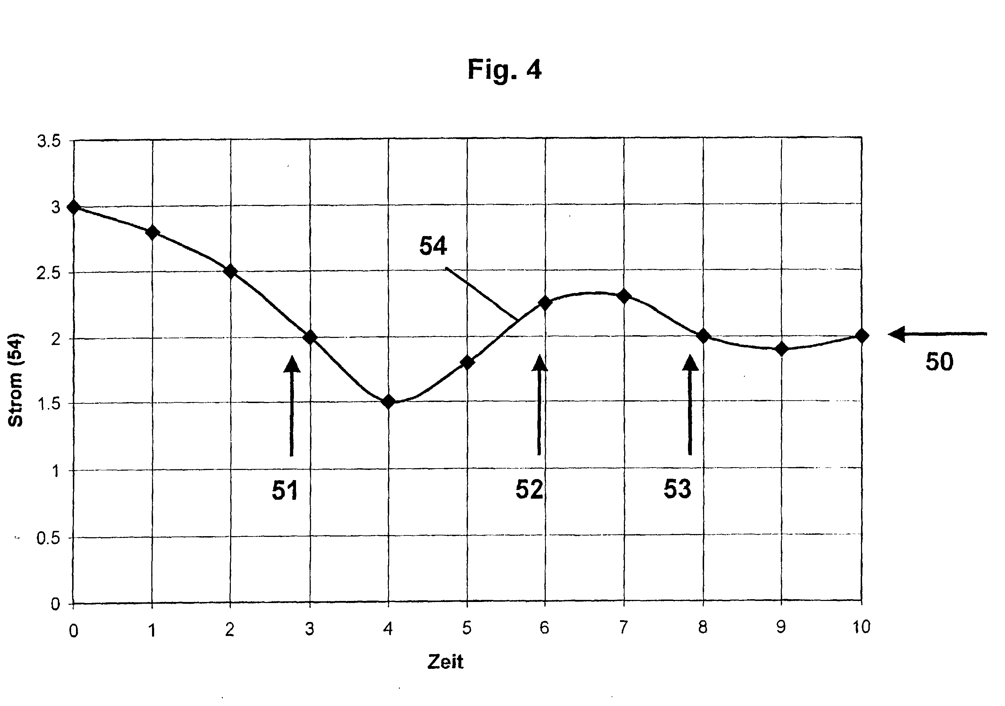

Figur 4 zeigt die Regelung der Biozidzugabe bei Verwendung der zweiten Methode, bei der die an den Temperatursensoren 16 und 17 gemessene Temperaturdifferenz 44 konstant gehalten wird, indem der durch das Peltier-Element 11 fliessende Strom 54 angepasst wird. Wiederum beginnt die Graphik zur Zeit 0 in einer Situation ohne Biofilm 55. Die Schichtdicke 56 nimmt dann wiederum zu, und der Strom 54 entsprechend ab, bis ein vorgegebener, kritischer Wert des Stromes 50, welcher für eine bestimmte Schichtdicke 56 charakteristisch ist, unterschritten ist, und die Steuereinheit mit Biozidzugabe 51 reagiert. Ganz analog zur Figur 3a) pendelt sich nach einer gewissen Zeit die Regelung der Biozidzugabe auf das Schichtwachstum ein, und natürlicher Aufbau der Schicht und biozidinduzierter Abbau halten sich ungefähr beim kritischen Wert 50 die Waage.

Die oben beschriebenen Regelungsmethoden sind nicht davon abhängig, dass der genaue Zusammenhang zwischen der Schichtdicke 56 und dem von der Messsonde 21 ermittelten Messwert 44 oder 54 bekannt ist. In der Praxis müssen die Messsonde 21 und die Steuereinheit 30 ohnehin auf die betrachtete Umgebung angepasst werden. Es kann sich u.U. herausstellen, dass die Schichtdicke 56 an der Messsonde 21 nicht genau identisch ist mit derjenigen an den kritischen Prozesswasserbehälterwänden 27. Dies tut dem Verfahren aber keinen Abbruch, da man einfach den kritischen Wert 40 oder 50 für die Messgrössen 44 oder 54 empirisch an die lokalen Verhältnisse anpassen kann.

Es kann sich beim oben beschriebenen Verfahren zusätzlich als nützlich erweisen, die Dimensionierung der Flächen in Strömungsrichtung gering zu halten. Um trotzdem ein gutes Messsignal zu erhalten, kann dafür die Dimensionierung senkrecht zur Strömungsrichtung grösser gewählt werden. Da eine lokale Erwärmung bzw. Abkühlung des Prozessmediums beim Überstreichen der Flächen auftreten kann, ist zur Verhinderung von Verfälschungen des Messsignales darauf zu achten, dass das Prozessmedium eine möglichst kurze Verweilzeit über der Fläche aufweist. Derartige Verfälschungen können ausserdem berücksichtigt und weitgehend eliminiert werden, indem als weitere Messgrösse die Flussgeschwindigkeit des Prozessmediums berücksichtigt wird.

Selbstverständlich sind die hier angegebenen Ausführungsbeispiele keineswegs abschliessend, und andere Möglichkeiten sind denkbar. Z.B. kann zu einer besseren Regelbarkeit zusätzlich auch noch die Temperatur des Prozesswassers 26 verwendet werden oder es ist denkbar, dass mehr als zwei, auf mehreren verschiedenen Temperaturen gehaltene Flächen zum Einsatz kommen können.

### BEZEICHNUNGSLISTE

- 10: Leitung zum Peltier-Element
- 11: Peltier-Element
- 12: Kalte Lötstelle von 11
- 13: Heisse Lötstelle von 11
- 14: Kalter Kontaktblock
- 15: Heisser Kontaktblock
- 16: Thermosensor in 14
- 17: Thermosensor in 15
- 18: Leitung von und zu 16
- 19: Leitung von und zu 17
- 20: Messkopfkappe
- 21: Messkopf
- 22: Zentraleinheit von 21
- 23: Befestigungsmittel
- 24: Trägerblock von 21
- 25: Prozesswasserstrom
- 26: Prozesswasser
- 27: Behälterwand
- 28: kalte Messfläche
- 29: warme Messfläche
- 30: Steuereinheit
- 31: Biozidtank
- 32: Biozidlösung
- 33: Pumpe
- 34-36: Signalleitungen
- 37: Biozidstrom
- 38: Biozideinlass
- 39: Messkopfbefestigung
- 40: Kritischer Wert
- 41,43: Start der Biozidzugabe
- 42: Ende der Biozidzugabe
- 44: Temperaturdifferenz
- 45: Lineare Approximation
- 50: Kritische Schwelle
- 51,53: Start der Biozidzugabe
- 52: Ende der Biozidzugabe
- 54: Strom
- 55: Biofilm
- 56: Dicke von 55

## Patentansprüche

1. Verfahren zur Bestimmung der Dicke (56) von Ablagerungen (55) auf der Innenseite von Wänden (27) von Behältern und/oder Leitungen, in welchen Prozessmedium (26) fliesst, bei dem gleichzeitig an wenigstens zwei, mit dem Prozessmedium (26) in Kontakt stehenden und dem Ablagerungsprozess ausgesetzten Flächen (28,29) die Wärmeleitung oder der Wärmeleitwiderstand gemessen wird, der zwischen den Flächen (28,29) und dem Prozessmedium (26) durch die Ablagerungsschicht (55) wirksam ist, indem wenigstens eine dieser Flächen (28) auf einer Temperatur gehalten wird, die niedriger als die Temperatur des Prozessmediums (26) liegt, und wenigstens eine andere dieser Flächen (29) auf einer Temperatur gehalten wird, welche höher als die Temperatur des Prozessmediums (26) liegt.

2. Verfahren nach Anspruch 1, wobei als zusätzliche Messgrösse die Temperatur des Prozessmediums (26) verwendet wird.

3. Verfahren nach einem der Ansprüche 1 oder 2, wobei als zusätzliche Messgrösse die Flussgeschwindigkeit des Prozessmediums (26) verwendet wird.

4. Verfahren nach einem der Ansprüche 1 bis 3, wobei als Prozessmedium (26) Wasser verwendet wird.

5. Verfahren nach Anspruch 4, wobei Ablagerungen (55) gemessen werden, die wenigstens teilweise aus biologischem Material bestehen.

6. Verfahren nach einem der Ansprüche 4 oder 5, wobei der Behälter oder die Leitung Teil eines Kühlwasserkreises, eines Wärmetauschers, eines Boilers oder insbesondere eines Prozesswasserstromes der Papierindustrie ist.

7. Verfahren nach einem der Ansprüche 1 bis 6, wobei die Temperaturdifferenz der auf einer Temperatur niedriger als das Prozessmedium (26) und der auf einer Temperatur höher als das Prozessmedium (26) gehaltenen Flächen (28,29) in einem Bereich bis 20°, bevorzugt in einem Bereich bis 10° und insbesondere bevorzugt in einem Bereich bis 5° Celsius gehalten wird, so dass die Ablagerungsbedingungen auf den Flächen (28,29) mit den Ablagerungsbedingungen an den sonstigen Wänden (27) der Behälter und/oder der Leitungen vergleichbar ist.

8. Verfahren nach einem der Ansprüche 1 bis 7, wobei in Abhängigkeit der Wärmeleitung oder des Wärmeleitwiderstandes und damit indirekt der Dicke (56) der Ablagerung (55) ein Steuersignal (44,54) erzeugt wird, welches in einer Regelung und/oder für eine Anzeige verwendet werden kann.

9. Verfahren nach einem der Ansprüche 1 bis 8, wobei die Dicke (56) der Ablagerung (55) über einen funktionellen, kalibrierbaren Zusammenhang zwischen der Wärmeleitung oder dem Wärmeleitwiderstand und der Dicke (56) der Ablagerungen (55) ermittelt werden kann.

10. Verfahren nach einem der Ansprüche 1 bis 9, wobei für die Messung zwei Flächen (28,29) verwendet werden, wobei diese Flächen (28,29) thermisch voneinander entkoppelt sind, und die Kühlung der einen Fläche (28) respektive die Erwärmung der anderen Fläche (29) wenigstens mittelbar mit Lötstellen (12,13) eines Peltier-Elements (11) erzeugt wird.

11. Verfahren nach einem der Ansprüche 1 bis 10, wobei wenigstens die mit dem Prozessmedium (26) in Kontakt stehenden Flächen (28,29) vor der eigentlichen Messung chemisch, physikalisch, oder biologisch -vorbehandelt oder beschichtet werden, insbesondere bevorzugt indem wenigstens die genannten Flächen (28,29) während einer Zeit im Bereich von Tagen bis Wochen in einem dem Prozessmedium ähnlichen Medium gehalten werden.

12. Vorrichtung zur Bestimmung der Dicke (56) von Ablagerungen (55) auf der Innenseite von Wänden (27) von Behältern und/oder Leitungen, in welchen Prozessmedium (26) fliesst, wobei
Mittel (11) zum Messen der an wenigstens zwei, mit dem Prozessmedium (26) in Kontakt stehenden und dem Ablagerungsprozess ausgesetzten Flächen (28,29) auftretenden Wärmeleitung oder des Wärmeleitwiderstands, der zwischen den Flächen (28,29) und dem Prozessmedium (26) durch die Ablagerungsschicht (55) wirksam ist, vorhanden sind, wobei
diese Mittel (11) wenigstens eine dieser Flächen (28) auf einer Temperatur halten, die niedriger als die Temperatur des Prozessmediums (26) liegt, und wenigstens eine andere dieser Flächen (29) auf einer Temperatur halten; welche höher als die Temperatur des Prozessmediums (26) liegt.

13. Vorrichtung nach Anspruch 12, wobei die Flächen (28,29) in Flussrichtung des Prozessmediums (26) eine möglichst geringe Ausdehnung aufweisen, und dadurch die Verweilzeit des Prozessmediums (26) über den Flächen (28,29) möglichst kurz gehalten wird.

14. Vorrichtung nach einem der Ansprüche 12 oder 13, wobei zwei Flächen (28,29) vorhanden sind, diese Flächen (28,29) thermisch voneinander entkoppelt sind, und die Kühlung der einen Fläche (28) respektive die Erwärmung der anderen Fläche (29) wenigstens mittelbar mit Lötstellen (12,13) eines Peltier-Elements (11) erzeugt wird.

15. Vorrichtung nach Anspruch 14, wobei die kalte (12) und die warme (13) Lötstelle des Peltier-Elements (11) in thermischer Verbindung mit Kontaktblöcken (14,15) stehen, welche Kontaktblöcke (14,15) thermisch voneinander entkoppelt sind und welche Kontaktblöcke (14,15) auf den dem Peltier-Element (11) abgewandten Seiten die mit dem Prozessmedium (26) über die Ablagerungsschicht (55) in Verbindung stehenden Flächen (28,29) bilden, und zwischen dem Peltier-Element (11) und den Flächen (28,29) Thermosensoren (16,17) in den Kontaktblöcken (14,15) angeordnet sind, welche die Temperatur in den Kontaktblöcken (14,15) messen.

16. Vorrichtung nach Anspruch 15, wobei das Peltier-Element (11) kontinuierlich mit einem konstanten Strom angesteuert wird und die Differenz (44) der in den beiden Thermosensoren (16,17) gemessenen Temperaturen als kalibrierbares Mass für die Dikke (56) der Ablagerungsschicht (55) auf den Flächen (28,29) verwendet wird.

17. Vorrichtung nach Anspruch 15, wobei die Differenz der in den beiden Thermosensoren (16,17) gemessenen Temperaturen konstant gehalten wird, indem das Peltier-Element (11) mit einem kompensierenden elektrischen Strom (54) angesteuert wird und dieser Strom (54) als kalibrierbares Mass für die Dicke (56) der Ablagerungsschicht (55) auf den Flächen (28,29) verwendet wird.

18. Vorrichtung nach einem der Ansprüche 16 oder 17, wobei die Flächen (28,29) so gestaltet sind, dass zwischen dem kalibrierbaren Mass (44,54) für die Dicke (56) der Ablagerungsschicht (55) und der Dicke (56) der Ablagerung (55) eine näherungsweise lineare Beziehung resultiert.

19. Vorrichtung nach einem der Ansprüche 16 bis 18, wobei das kalibrierbare Mass (44,54) für die Dicke (56) der Ablagerungsschicht (55) als Regelsignal einer Steuereinheit (30) übergeben wird, diese Steuereinheit (30) dieses Regelsignal verwendet, um die Schichtdicke beeinflussende Prozessbedingungen zu regein, insbesondere um eine Pumpe oder ein Ventil, welches die Zugabe des die Ablagerung (55) beeinflussenden Mittels (32) ins Prozessmedium (26) reguliert, anzusteuern, und über diesen Regelkreis die Zugabe des Mittels (32) in optimierter Weise kontinuierlich gewährleistet ist, insbesondere die Schichtdicke (56) durch die Zugabe auf einen Sollwert eingestellt wird.

20. Vorrichtung nach einem der Ansprüche 12 bis 19, wobei als Prozessmedium (26) bevorzugt Wasser vorliegt, und die Wärmeleitung oder der Wärmeleitwiderstand mittels eines in das Prozessmedium (26) getauchten Messkopfs (21) gemessen wird, dessen dem Prozessmedium (26) ausgesetzte Aussenseite wenigstens teilweise von den Flächen (28,29) gebildet wird.

21. Vorrichtung nach Anspruch 20, wobei der Messkopf (21) stromlinienförmig ausgebildet ist, die Flächen (28,29) eine Beschichtung aufweisen, so dass Form und Beschichtung dazu führen, die Ablagerung auf den Flächen (28,29) im wesentlichen identisch ist mit der Ablagerung auf den Wänden (27) des Behälters oder der Leitung, und die Ablagerungen (55) auf den Flächen (28,29) nicht durch die Strömung (25) des Prozessmediums (26) abgespült werden.

22. Vorrichtung nach Anspruch 21, wobei die Flächen (28,29) mit einer Schicht aus Niob-Zirkon-Nitrit beschichtet sind, und dass die Beschichtung insbesondere bevorzugt aus Niob-Zirkon-Nitrit einer Dicke im Bereich von 1,5 µm bis 3 µm besteht.

23. Vorrichtung nach der Kombination der Ansprüche 16 und 17 mit zwei Flächenpaaren und zwei diesen jeweils zugeordneten Peltier-Elementen, wobei das Peltier-Element eines der beiden Flächenpaare kontinuierlich mit einem konstanten Strom angesteuert wird und das dem anderen Flächenpaar zugeordnete Peltier-Element mit einem kompensierenden elektrischen Strom angesteuert wird, um die Temperaturdifferenz zwischen den Flächen des anderen Flächenpaars konstant zu halten.

24. Vorrichtung nach einem der Ansprüche 12 - 23 mit mindestens zwei Flächenpaaren, deren Temperaturmittelwert gegeneinander verschoben ist.

## Claims

1. Method for determining the thickness (56) of depositions (55) on the inner side of walls (27) of tanks and/or lines in which process medium (26) is flowing, in which method measuring is carried out simultaneously on at least two surfaces (28, 29) in contact with the process medium (26) and exposed to the depositing process to ascertain the heat conduction or the heat conducting resistance which is effective between the surfaces (28, 29) and the process medium (26) as a result of the deposition layer (55), and in which method at least one of these surfaces (28) is kept at a temperature which is lower than the temperature of the process medium (26) and at least one other of these surfaces (29) is kept at a temperature which is higher than the temperature of the process medium (26).

2. Method according to Claim 1, the temperature of the process medium (26) being used as an additional measured variable.

3. Method according to either of Claims 1 and 2, the flow rate of the process medium (26) being used as an additional measured variable.

4. Method according to one of Claims 1 to 3, water being used as the process medium (26).

5. Method according to Claim 4, depositions (55) which consist at least partly of biological material being measured.

6. Method according to either of Claims 4 and 5, the tank or the line being part of a cooling water circuit, of a heat exchanger, of a boiler or in particular of a process water flow of the papermaking industry.

7. Method according to one of Claims 1 to 6, the temperature difference of the surface (28) kept at a temperature lower than the process medium (26) and of the surface (29) kept at a temperature higher than the process medium (26) being kept in a range of up to 20°, preferably in a range of up to 10° and particularly preferably in a range of up to 5° Celsius, so that the depositing conditions on the surfaces (28, 29) are comparable with the depositing conditions on the other walls (27) of the tanks and/or of the lines.

8. Method according to one of Claims 1 to 7, a control signal (44, 54) which can be used in an automatic control system and/or for a display being generated in dependence on the heat conduction or the heat conducting resistance, and consequently indirectly the thickness (56) of the deposition (55).

9. Method according to one of Claims 1 to 8, it being possible for the thickness (56) of the deposition (55) to be determined by means of a functional, calibratable relationship between the heat conduction or the heat conducting resistance and the thickness (56) of the depositions (55).

10. Method according to one of Claims 1 to 9, two surfaces (28, 29) being used for the measurement, these surfaces (28, 29) being thermally decoupled from each other, and the cooling of the one surface (28) and the heating of the other surface (29) being produced at least indirectly by soldering points (12, 13) of a Peltier element (11).

11. Method according to one of Claims 1 to 10, at least the surfaces (28, 29) in contact with the process medium (26) being chemically, physically or biologically pretreated or coated before the actual measurement, particularly preferably in that at least the said surfaces (28, 29) are kept in a medium similar to the process medium for a time in the range from days to weeks.

12. Device for determining the thickness (56) of depositions (55) on the inner side of walls (27) of tanks and/or lines in which process medium (26) is flowing, in which device
there are means (11) for measuring the heat conduction occurring on at least two surfaces (28, 29) in contact with the process medium (26) and exposed to the depositing process or the heat conducting resistance which is effective between the surfaces (28, 29) and the process medium (26) as a result of the deposition layer (55), in which device
these means (11) keep at least one of these surfaces (28) at a temperature which is lower than the temperature of the process medium (26) and at least one other of these surfaces (29) at a temperature which is higher than the temperature of the process medium (26).

13. Device according to Claim 12, the surfaces (28, 29) having as small an extent as possible in the flow direction of the process medium (26), and as a result the dwell time of the process medium (26) over the surfaces (28, 29) being kept as short as possible.

14. Device according to either of Claims 12 or 13, in which there are two surfaces (28, 29), these surfaces (28, 29) are thermally decoupled from each other, and the cooling of the one surface (28) and the heating of the other surface (29) is produced at least indirectly by soldering points (12, 13) of a Peltier element (11).

15. Device according to Claim 14, the cold soldering point (12) and the warm soldering point (13) of the Peltier element (11) being in thermal connection with contact blocks (14, 15), which contact blocks (14, 15) are thermally decoupled from each other and which contact blocks (14, 15) form on the sides facing away from the Peltier element (11) the surfaces (28, 29) that are in connection with the process medium (26) via the deposition layer (55), and thermal sensors (16, 17) which measure the temperature in the contact blocks (14, 15) being arranged between the Peltier element (11) and the surfaces (28, 29).

16. Device according to Claim 15, the Peltier element (11) being continuously activated by a constant current and the difference (44) of the temperatures measured in the two thermal sensors (16, 17) being used as a calibratable measure of the thickness (56) of the deposition layer (55) on the surfaces (28, 29).

17. Device according to Claim 15, the difference of the temperatures measured in the two thermal sensors (16, 17) being kept constant, in that the Peltier element (11) is activated by a compensating electrical current (54) and this current (54) is used as a calibratable measure of the thickness (56) of the deposition layer (55) on the surfaces (28, 29).

18. Device according to either of Claims 16 and 17, the surfaces (28, 29) being formed in such a way that an approximately linear relationship results between the calibratable measure (44, 54) of the thickness (56) of the deposition layer (55) and the thickness (56) of the deposition (55).

19. Device according to one of Claims 16 to 18, the calibratable measure (44, 54) of the thickness (56) of the deposition layer (55) being transferred as a control signal to a control unit (30), this control unit (30) using this control signal to automatically control process conditions influencing the layer thickness, in particular to activate a pump or a valve which regulates the adding of the agent (32) influencing the deposition (55) into the process medium (26), and the adding of the agent (32) in an optimized way being continuously ensured by means of this control circuit, in particular the layer thickness (56) being set to a desired value by the addition.

20. Device according to one of Claims 12 to 19, the process medium (26) preferably taking the form of water, and the heat conduction or the heat conducting resistance being measured by means of a measuring head (21) which is immersed in the process medium (26) and the outer side of which, exposed to the process medium (26), is formed at least partly by the surfaces (28, 29).

21. Device according to Claim 20, the measuring head (21) being formed in a streamlined manner, the surfaces (28, 29) having a coating, so that the form and coating lead to the deposition on the surfaces (28, 29) being substantially identical to the deposition on the walls (27) of the tank or the line, and the depositions (55) on the surfaces (28, 29) not being rinsed away by the flow (25) of the process medium (26).

22. Device according to Claim 21, the surfaces (28, 29) being coated with a layer of niobium-zirconium-nitrite, and it particularly being preferred for the coating to comprise niobium-zirconium-nitrite of a thickness in the range from 1.5 µm to 3 µm.

23. Device according to the combination of Claims 16 and 17 with two pairs of surfaces and two Peltier elements respectively assigned to them, the Peltier element of one of the two pairs of surfaces being activated continuously with a constant current and the Peltier element assigned to the other pair of surfaces being activated with a compensating electrical current, in order to keep the temperature difference between the surfaces of the other pair of surfaces constant.

24. Device according to one of Claims 12 - 23 with at least two pairs of surfaces, the mean temperature value of which is displaced with respect to each other.

## Revendications

1. Procédé pour déterminer l'épaisseur (56) des dépôts (55) sur l'intérieur des parois (27) des réservoirs et/ou des conduits dans lesquels circule un fluide de procédé (26), avec lequel la conductivité thermique ou la résistance thermique qui intervient entre les surfaces (28, 29) et le fluide de procédé (26) à travers la couche de dépôt (55) est mesurée simultanément sur au moins deux surfaces (28, 29) en contact avec le fluide de procédé (26) et exposées au processus de dépôt en ce qu'au moins l'une de ces surfaces (28) est maintenue à une température qui est inférieure à la température du fluide de procédé (26) et au moins une autre de ces surfaces (29) est maintenue à une température qui est supérieure à la température du fluide de procédé (26).

2. Procédé selon la revendication 1, avec lequel la température du fluide de procédé (26) est utilisée comme grandeur de mesure supplémentaire.

3. Procédé selon l'une des revendications 1 ou 2, avec lequel la vitesse d'écoulement du fluide de procédé (26) est utilisée comme grandeur de mesure supplémentaire.

4. Procédé selon l'une des revendications 1 à 3, avec lequel le fluide de procédé (26) utilisé est de l'eau.

5. Procédé selon la revendications 4, avec lequel les dépôts (55) mesurés se composent au moins en partie de matière biologique.

6. Procédé selon l'une des revendications 4 ou 5, avec lequel le réservoir ou le conduit fait partie d'un circuit d'eau de refroidissement, d'un échangeur thermique, d'une chaudière ou plus particulièrement d'un courant d'eau de procédé de l'industrie du papier.

7. Procédé selon l'une des revendications 1 à 6, avec lequel la différence de températures entre les surfaces (28, 29) maintenues respectivement à une température inférieure à celle du fluide de procédé (26) et à une température supérieure à celle du fluide de procédé (26) est maintenue dans une plage de 20 °C, de préférence dans une plage de 10 °C et plus particulièrement dans une plage de 5 °C de manière à ce que les conditions de dépôt sur les surfaces (28, 29) soient comparables aux conditions de dépôt sur les autres parois (27) du réservoir et/ou des conduits.

8. Procédé selon l'une des revendications 1 à 7, avec lequel un signal de commande (44, 54) qui peut être utilisé dans une régulation et/ou pour une indication est généré en fonction de la conductivité thermique ou de la résistance thermique et ainsi indirectement de l'épaisseur (56) du dépôt (55).

9. Procédé selon l'une des revendications 1 à 8, avec lequel l'épaisseur (56) du dépôt (55) peut être déterminée par le biais d'une relation fonctionnelle calibrable entre la conductivité thermique ou la résistance thermique et l'épaisseur (56) des dépôts (55).

10. Procédé selon l'une des revendications 1 à 9, avec lequel deux surfaces (28, 29) sont utilisées pour la mesure, ces surfaces (28, 29) étant découplées thermiquement l'une de l'autre et le refroidissement de l'une des surfaces (28) ou le réchauffement de l'autre surface (29) est produit au moins directement avec les points de soudure (12, 13) d'un élément de Peltier (11).

11. Procédé selon l'une des revendications 1 à 10, avec lequel au moins les surfaces (28, 29) qui sont en contact avec le fluide de procédé (26) subissent un pré-traitement chimique, physique ou biologique avant la mesure proprement dite, notamment et de préférence en maintenant au moins les surfaces mentionnées (28, 29) pendant une période comprise entre quelques jours et quelques semaines dans un fluide similaire au fluide de procédé.

12. Dispositif pour déterminer l'épaisseur (56) des dépôts (55) sur l'intérieur des parois (27) des réservoirs et/ou des conduits dans lesquels circule un fluide de procédé (26), avec lequel il existe des moyens (11) pour mesurer la conductivité thermique ou la résistance thermique qui intervient entre les surfaces (28, 29) et le fluide de procédé (26) à travers la couche de dépôt (55) sur au moins deux surfaces (28, 29) en contact avec le fluide de procédé (26) et exposées au processus de dépôt, ces moyens (11) maintenant au moins l'une de ces surfaces (28) à une température qui est inférieure à la température du fluide de procédé (26) et maintenant au moins une autre de ces surfaces (29) à une température qui est supérieure à la température du fluide de procédé (26).

13. Dispositif selon la revendication 12, avec lequel les surfaces (28, 29) présentent dans le sens de l'écoulement du fluide de procédé (26) une extension la plus faible possible et le temps de séjour du fluide de procédé (26) sur les surfaces (28, 29) est ainsi le plus court possible.

14. Dispositif selon l'une des revendications 12 ou 13, avec lequel il existe deux surfaces (28, 29), ces surfaces (28, 29) sont découplées thermiquement l'une de l'autre et le refroidissement de l'une des surfaces (28) ou le réchauffement de l'autre surface (29) est produit au moins directement avec les points de soudure (12, 13) d'un élément de Peltier (11).

15. Dispositif selon la revendication 14, avec lequel le point de soudure froid (12) et chaud (13) de l'élément de Peltier (11) se trouvent en liaison thermique avec des blocs de contact (14, 15), lesdits blocs de contact (14, 15) étant découplés thermiquement l'un de l'autre et lesdits blocs de contact (14, 15) formant sur les côtés opposés à l'élément de Peltier (11) les surfaces (28, 29) qui sont en contact avec le fluide de procédé (26) par le biais de la couche de dépôt (55), et des capteurs thermiques (16, 17) qui mesurent la température des blocs de contact (14, 15) sont disposés dans les blocs de contact (14, 15) entre l'élément de Peltier (11) et les surfaces (28, 29).

16. Dispositif selon la revendication 15, avec lequel l'élément de Peltier (11) est excité continuellement par un courant constant et la différence (44) entre les températures mesurées dans les deux capteurs thermiques (16, 17) est utilisée comme indication calibrable de l'épaisseur (56) de la couche de dépôt (55) sur les surfaces (28, 29).

17. Dispositif selon la revendication 15, avec lequel la différence entre les températures mesurées dans les deux capteurs thermiques (16, 17) est maintenue constante en excitant l'élément de Peltier (11) avec un courant électrique (54) compensé et en utilisant ce courant (54) comme indication calibrable de l'épaisseur (56) de la couche de dépôt (55) sur les surfaces (28, 29).

18. Dispositif selon l'une des revendications 16 ou 17, avec lequel les surfaces (28, 29) sont configurées de telle manière qu'il en résulte une relation quasiment linéaire entre l'indication calibrable (44, 54) de l'épaisseur (56) de la couche de dépôt (55) et l'épaisseur (56) du dépôt (55).

19. Dispositif selon l'une des revendications 16 à 18, avec lequel l'indication calibrable (44, 54) de l'épaisseur (56) de la couche de dépôt (55) est transmis à unité de command (30) sous la forme d'un signal de régulation, cette unité de commande (30) utilise ce signal de régulation pour réguler les conditions du procédé qui influencent l'épaisseur de la couche, notamment pour commander une pompe ou une vanne qui régule l'apport de l'agent (32) influençant le dépôt (55) dans le fluide de procédé (26) et, grâce à ce circuit de régulation, l'apport de l'agent (32) est garantit constamment optimal, notamment l'épaisseur de la couche (56) est réglée par l'apport à une valeur de consigne.

20. Dispositif selon l'une des revendications 12 à 19, avec lequel le fluide de procédé (26) utilisé est de préférence de l'eau et la conductivité thermique ou la résistance thermique est mesurée au moyen d'une tête de mesure (21) immergée dans le fluide de procédé (26) dont le côté extérieur exposé au fluide de procédé (26) est au moins partiellement constitué par les surfaces (28, 29).

21. Dispositif selon la revendication 20, avec lequel la tête de mesure (21) présente une forme aérodynamique, les surfaces (28, 29) présentent un revêtement de manière à ce que la forme et le revêtement ont pour effet que le dépôt sur les surfaces (28, 29) est pour l'essentiel identique au dépôt sur les parois (27) du réservoir ou du conduit et les dépôts (55) sur les surfaces (28, 29) ne sont pas éliminés par l'écoulement (25) du fluide de procédé (26).

22. Dispositif selon la revendication 21, avec lequel les surfaces (28, 29) sont recouvertes d'une couche de niobium-zircon-nitrure et que le revêtement se compose notamment de préférence de niobium-zircon-nitrure sur une épaisseur de 1,5 à 3 µm.

23. Dispositif selon la combinaison des revendications 16 et 17 comprenant deux paires de surfaces et deux éléments Peltier respectivement associés à celles-ci, avec lequel l'élément de Peltier de l'une des deux paires de surfaces est excité continuellement avec un courant constant et l'élément de Peltier associé à l'autre paire de surfaces est excité par un courant électrique de compensation afin de maintenir constante la différence de températures entre les surfaces de l'autre paire de surfaces.

24. Dispositif selon l'une des revendications 12 à 23 comprenant au moins deux paires de surfaces dont les valeurs moyennes de la température sont décalées l'une par rapport à l'autre.
